(19) Europäisches Patentamt / European Patent Office / Office européen des brevets

(11) **EP 1 252 698 B1**

(12) **EUROPÄISCHE PATENTSCHRIFT**

(45) Veröffentlichungstag und Bekanntmachung des Hinweises auf die Patenterteilung:
**30.05.2007 Patentblatt 2007/22**

(51) Int Cl.:
*H02J 1/14* *(2006.01)*     *H01F 30/04* *(2006.01)*

(21) Anmeldenummer: **01900396.1**

(22) Anmeldetag: **09.01.2001**

(86) Internationale Anmeldenummer:
**PCT/EP2001/000142**

(87) Internationale Veröffentlichungsnummer:
**WO 2001/057984 (09.08.2001 Gazette 2001/32)**

(54) **INHÄRENT KURZSCHLUSSFESTES STROMVERTEILUNGSSYSTEM**

INHERENTLY SHORT-CIRCUIT-PROOF POWER DISTRIBUTION SYSTEM

SYSTEME DE DISTRIBUTION DE COURANT PRESENTANT UNE RESISTANCE AUX COURTS-CIRCUITS INHERENTE

(84) Benannte Vertragsstaaten:
**DE FR GB**

(30) Priorität: **05.02.2000 DE 10005176**

(43) Veröffentlichungstag der Anmeldung:
**30.10.2002 Patentblatt 2002/44**

(73) Patentinhaber: **Vetco Gray Controls Limited Bristol BS48 1BS (GB)**

(72) Erfinder:
- **HEINEMANN, Lothar**
  **69493 Hirschberg-Leutershausen (DE)**
- **HELFRICH, Jens**
  **67346 Speyer (DE)**

(74) Vertreter: **Newstead, Michael John et al**
**Page Hargrave**
**Southgate**
**Whitefriars**
**Lewins Mead**
**Bristol BS1 2NT (GB)**

(56) Entgegenhaltungen:
**EP-A- 0 350 767**     **EP-A- 0 710 964**
**WO-A-98/45922**     **DE-U- 29 808 082**

- **BOLL R: "ENTWICKLUNGSTENDENZEN BEI WEICHMAGNETISCHEN WERKSTOFFEN. \2. TEIL VIELE NEUENTWICKLUNGEN DURCH HALBLEITERTECHNIK ANGEREGT" ELEKTRONIK,DE,FRANZIS VERLAG GMBH. MUNCHEN, Bd. 40, Nr. 14, 9. Juli 1991 (1991-07-09), Seiten 48-53, XP000241414 ISSN: 0013-5658**

EP 1 252 698 B1

**Beschreibung**

Die Erfindung bezieht sich auf ein inhärent kurzschlußfestes Stromverteilungssystem, mit dem dezentral angeordnete elektronische Baugruppen versorgt werden können.

Insbesondere eignet sich das Stromverteilungssystem für die Versorgung von elektronischen Baugruppen bei der Tiefsee-Ölförderung, d.h. die Versorgung von elektronischen Baugruppen, die sich auf dem Meeresboden befinden. Deshalb wird im folgenden auf diese Anwendung Bezug genommen, obwohl das Stromverteilungssystem allgemein anwendbar ist.

Bei der Tiefsee-Ölförderung können viele der zu steuernden Prozesse nicht zentral an einem Ort angeordnet werden. Ein Teil der elektrischen Ausrüstung befindet sich auf der Bohrinsel, ein weiterer Teil muß auf dem Meeresgrund in der Nähe der Bohrlöcher in druckfesten Behältern angeordnet werden, wobei der Abstand zwischen der Bohrinsel und der elektrischen Ausrüstung auf dem Meeresgrund zum Teil mehr als 1 km beträgt.

Die Energieversorgung der elektrischen Ausrüstung (Sensoren, kleine Motoren usw.) auf dem Meeresboden erfolgt dabei üblicherweise zentral über ein langes Seekabel mit einer Wechselspannung bei niedriger Frequenz (50 bis 60Hz) von der Bohrinsel aus. Auf dem Meeresboden wird die Energie dann sternförmig mit Hilfe eines Transformators zu den im allgemeinen $n$ Endpunkten (Bohrlöcher) wiederum mit Kabeln verteilt. Durch geeignete Netzteile wird die Spannung an den $n$ Endpunkten stabilisiert. An den Ausgängen der Netzteile sind verschiedene Verbraucher (Sensoren, kleine Motoren usw.) angeschlossen.

Ein verteiltes Stromversorgungssystem für derartige Anlagen muß sehr robust und zuverlässig sein, da ein Auswechseln des Systems auf dem Meeresboden nahezu unmöglich oder nur mit sehr hohem Kostenaufwand möglich ist. Die $n$ Ausgänge des Systems müssen dabei einzeln kurzschlußfest sein und dürfen im Falle eines Kurzschlusses (z.B. durch einen Steinschlag auf das verbindende Kabel zum Netzteil) keinesfalls zum Ausfall eines anderen Ausganges führen. D.h., selbst bei einem Kurzschluß von $m$ Verbindungskabeln (m ≤ n-1) darf die Funktiontüchtigkeit des verbleibenden Ausganges nicht beeinträchtigt werden. Auch ein Teilkurzschluß ist denkbar, wenn z.B. ein Stein die Isolierung der stromführenden Leiter durchtrennt und dadurch einen mitunter beträchtlicher Stromfluß durch das leitfähige das Kabel umgebende Meerwasser hervorruft. In einem solchen Fall kann sich insgesamt ein Strom in der Zuleitung und im Verteiltransformator einstellen, der zwar nicht zum Auslösen einer Sicherung auf der Bohrinsel führt (z.B. das zwei- bis dreifache des Nennstromes) wohl aber zur dauerhaften Beschädigung durch Überhitzung des Stromverteilungssystems auf dem Meeresgrund führen kann.

Nachfolgend wird beispielhaft zur Beschreibung des Stromverteüungssystems die Anzahl der Endpunkte zu n = 4 gewählt Sowohl zur Erläuterung des Standes der Technik, als auch anschließend zur Beschreibung der Erfindung.

Bei kleinen zu übertragenden Leistungen (z.B. < 10 W pro Ausgang) stellt man üblicherweise die Kurzschlußfestigkeit durch in Reihe zu den Kabeln angeordneten Bimetallschalter sicher, die direkt mit dem sekundärseitigen Anschluß des Transformators verbunden sind, bei einem Kurzschlußstrom öffnen und danach mit der dem Bimetallschalter spezifischen Zeltkonstante immer wieder zu- und abschalten. Bei höheren Leistungen (z.B. 1 kW pro Ausgang) ist dieses Verfahren zur Sicherung der Kurzfestigkeit nicht mehr möglich. Es sind folglich andere schaltungstechnische oder konstruktionstechnische Maßnahmen notwendig, um die Kurzschlußfestigkeit sicherzustellen.

Aus DE 298 08 082 U1 ist ein Schaltnetzteil bekannt, das einen Transformator mit einer Primärwicklung und mehreren Sekundärwicklungen auf einem gemeinsamen Kern enthält. Auch aus dem Aufsatz Boll R: "Entwicklungstendenzen bei weichmagnetischen Werkstoffen", Elektronik 14/1991, Seiten 48 bis 53 ist eine ähnliche Transformatoranordnung mit mehreren sekundärseitigen Wicklungen entnehmbar.

Der Erfindung liegt die Aufgabe zugrunde, ein Stromversorgungssystem, insbesondere für Anwendungen in der Tiefsee-Olförderung anzugeben, mit dem die Anforderungen bezüglich Kurzschlußfestigkeit bei hohem Wirkungsgrad und bei außerdem geringen Herstellungskosten erzielt werden können.

Diese Aufgabe wird durch ein inhärent kurzschlußfestes Stromversorgungssystem mit den im Anspruch 1 angegebenen Merkmalen gelöst. Vorteilhafte Ausgestaltungen sind in weiteren Ansprüchen angegeben.

Eine besonders vorteilhafte Anordnung ergibt sich bei Verwendung eines Verteiltransformators mit vier Sekundärwicklungen, weil dann ein UU-förmiger Kern verwendet werden kann und eine gleichmäßig verteilte Wicklungsanordnung auf einfache Weise möglich ist. Eine weitere Beschreibung der Erfindung und vorteilhafter Ausgestaltungen erfolgt nachstehend anhand der Zeichnungsfiguren.

Es zeigen:

Fig. 1   ein Stromversorgungssystem nach dem Stand der Technik,
Fig. 2   eine Abwandlung des bekannten Stromversorgungssystems,
Fig. 3   ein erfindungsgemäßes Stromversorgungssystem,
Fig. 4   eine bevorzugte Wicklungsanordnung auf einem Verteiltransformator mit vier Sekundärwicklungen,
Fig. 5   eine Schaltungsanordnung eines zweistufigen Netzteils für den Anschluß der jeweiligen elektronischen Baugruppe, und

Fig. 6 eine Schaltungsanordnung eines einstufigen Netzteils.

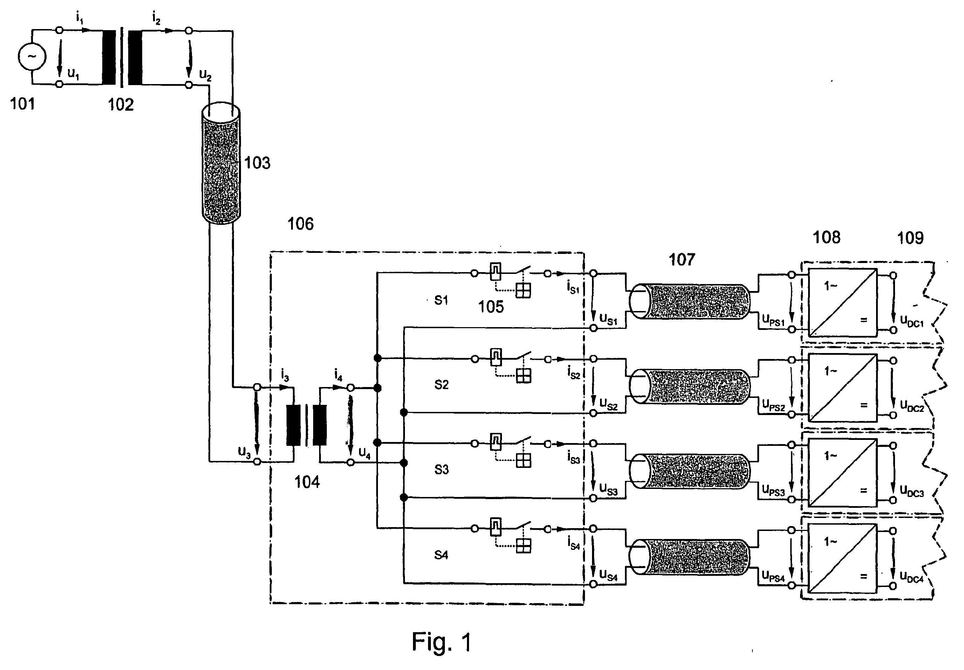

Fig. 1 zeigt ein Stromversorgungssystem nach dem Stand der Technik. Es besteht im einfachsten Fall aus einer auf einer Bohrinsel befindlichen Spannungsquelle 101, z.B. einem Dieselgenerator auf der Bohrinsel, mit der Quellenspannung $u_1(t)$ und dem Quellenstrom $i_1(t)$ sowie einem Transformator 102, der mit dem Generator verbunden ist und mit dem die vom Generator erzeugte Quellenspannung auf ein höheres Niveau angehoben werden kann. Der Transformator 102 kann mehrere Abgriffe auf der Sekundärseite aufweisen, um die sekundärseitige Spannung $u_2(t)$ und den sekundärseitigen Strom $i_2(t)$ in Abhängigkeit der Lastverhältnisse auf dem Meeresboden anzupassen. An der Sekundärseite des Transformators 102 ist ein Ende eines Tiefsee-Zuleitungskabels 103 angeschlossen. Das andere Ende des Tiefsee-Zuleitungskabels 103 ist mit der Primärseite eines in einem druckfesten Gehäuse 106 untergebrachten Verteiltransformators 104 auf dem Meeresboden verbunden. Die sekundärseitige Spannung $u_2(t)$ des Transformators 102 und die primärseitige Spannung $u_3(t)$ des Verteiltransformators 104 unterscheiden sich je nach Belastungszustand des Stromverteilungssystems in Betrag und Phase. Mit $i_3(t)$ ist der Primärstrom des Verteiltransformators 104 bezeichnet.

Der sekundärseitige Anschluß des Verteiltransformators 104 weist eine Spannung $u_4(t)$ und einen Strom $i_4(t)$ auf. An dem sekundärseitigen Anschluß sind gewöhnlich in Parallelschaltung die einzelnen Ausgänge S1 bis S4 des Verteiltransformators 104 mit einem jeweils in Reihe geschalteten Bimetallschalter 105 angeschlossen. An den Ausgängen des Druckbehälters 106 stellt sich jeweils eine Spannung $u_{si}(t)$ und ein Strom $i_{si}(t)$ (i = 1 .... 4) ein. An allen Ausgängen ist wiederum jeweils ein Ende eines Tiefsee-Verbindungskabels 107 angeschlossen, mit dessen anderem Ende die eigentlichen Verbraucher mittels eines Netzteils 108 in jeweiligen druckfesten Tiefsee-Elektronikmodulen 109 versorgt werden können. Mit $u_{PS1}$ bis $u_{PS4}$ sind die Eingangsspannungen der jeweiligen Netzteile 108 bezeichnet, mit $u_{DC1}$ bis $u_{DC4}$ die Ausgangs-Gleichspannungen der Netzteile.

Es wäre bei größeren zu übertragenden Leistungen zwar möglich, die bekannten einfachen, bei Kurzschluß ansprechenden Bimetallschalter 105 durch elektronische Kurzschlußstrombegrenzer, z.B. durch einen in Abhängigkeit des Laststromes gesteuerten Leistungstransistor zu ersetzen. Dafür wäre allerdings zum einen immer -eine die Zuverlässigkeit des-Systems reduzierende Hilfsenergieversorgung notwendig, mit der die Ansteuerleistung auch bei einem Kurzschluß geliefert werden kann. Zum anderen würden durch derartige aktive Kurzschlußstrombegrenzer zusätzliche Wärmequellen hervorgerufen, die einer entsprechenden Kühlung bedürften.

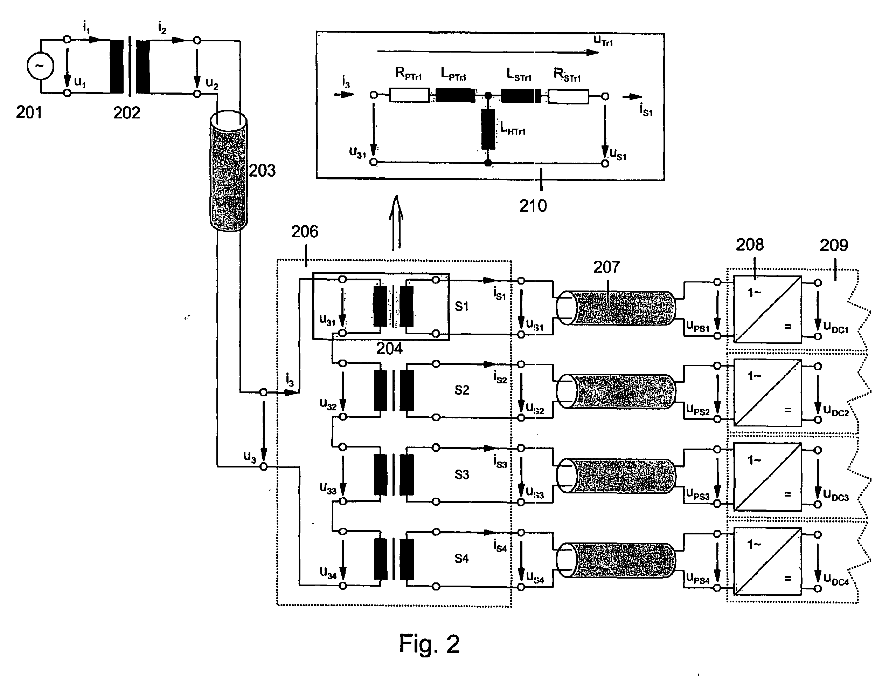

Auf einen aktiven Kurzschlußstrombegrenzer kann prinzipiell verzichtet werden, wenn an Stelle eines Verteiltransformators 104 für jeden Ausgang ein separater Verteiltransformator 204 verwendet wird. Fig. 2 zeigt eine derartige Anordnung. Die einzelnen Verteiltransformatoren 204 sind primärseitig in Reihe geschaltet, so daß bei gleichen Belastungen der individuellen Ausgänge und gleichen Transformatoren 204 eine gleichmäßige Verteilung der Primärspannung $u_{31}$ bis $u_{34}$ erzielt werden kann. Die Komponenten 201 bis 203, sowie 206 bis 209 stimmen mit den entsprechend bezeichneten Komponenten 101 bis 103 sowie 106 bis 109 der Fig. 1 überein. Wird z.B. im Falle einer Störung ein Verteiltransformator-Ausgang kurzgeschlossen, reduziert sich die Spannung an diesem Ausgang deutlich, bzw. kann diese bei einem Kurzschluß direkt an den Ausgangsklemmen sogar zu Null werden. Dieser Kurzschluß hat einen Kurzschlußstrom zu Folge, der aufgrund der parasitären Parameter des Verteiltransformators (Streuinduktivität und Wicklungswiderstand) einen Spannungsabfall hervorruft. Dieser Spannungsabfall ist dann gleich der restlichen an der Primärwicklung des betroffenen Transformators 204 liegenden Spannung. Auf Grund der Maschenregel für elektrische Netzwerke werden sich die anderen Spannungen an den Primärseiten der nicht betroffenen Transformatoren 204 entsprechend erhöhen, so daß sich dadurch auch die Sekundärspannungen an diesen Transformatoren ändern. Die nachgeschalteten Netzteile 208 an den nicht kurzgeschlossenen Ausgängen müssen diese Spannungsvariationen ausgleichen können. Dieser Sachverhalt soll an Hand eines Beispieles weiter verdeutlicht werden. Zu diesem Zweck wird angenommen, daß vor dem Störfall die folgenden Bedingungen gelten.

- Alle Transformatoren weisen die gleichen Parameter auf
- Alle Ausgänge werden jeweils mit einer Leistung $P_{Si0}$ (i = 1 ... 4) belastet.

Auf Grund der symmetrischen Verhältnisse werden sich an den Primärwicklungen der Transformatoren 204 die gleichen Spannungen $u_{3i0}(t)$ einstellen. Nach der Maschenregel für den Primärkreis folgt also:

$$u_{30}(t) = u_{310}(t) + u_{320}(t) + u_{330}(t) + u_{340}(t) = \sum_{i=1}^{4} u_{3i0}(t) \quad \text{und damit} \quad u_{3i0}(t) = \frac{u_{30}(t)}{4}$$

Nimmt man vereinfacht und ohne Verlust der Allgemeingültigkeit an, daß das Übersetzungsverhältnis eines jeden Transformators ü = 1 ist, läßt sich jeder Transformator durch ein Ersatzschaltbild gemäß der Darstellung nach 210 repräsentieren. Bei einer Last $P_{Si0}$ an jedem der Ausgänge wird sich folglich jeweils ein Strom $i_{si0(t)}$ und primär der Strom $i_{30}(t)$ einstellen, der an den parasitären Parametern eines jeden Transformators einen Spannungsabfall $u_{Tri0}(t)$ hervorruft.

Dieses symmetrische Verhältnis wird gestört, wenn z.B. Ausgang S1 kurzgeschlossen wird. Dann wird im schlimmsten Fall $u_{S1}(t) = 0$, und es wird sich der sekundärseitige Kurzschlußstrom $i_{s1k}(t)$ und demzufolge auch der primärseitige Kurzschlußstrom $i_{3k}(t)$ einstellen. Der Kurzschlußstrom ruft einen Spannungsabfall $u_{Tr1k}(t)$ hervor, der dann gleich der Spannung $u_{31k}(t)$ ist. Wegen $u_{31k}(t) < u_{310}(t)$ ist folglich auch die Symmetrie nicht mehr gewährleistet und $u_{3ik}(t) > u_{3i0}(t)$ (i = 2 ... 4) stellt sich ein, so daß auch $u_{Sik}(t) > u_{Si0}(t)$ (i = 2 ... 4) unmittelbar folgt.

Der sich einstellende Kurzschlußstrom kann durch die Transformatorparameter "gesteuert" werden. D.h., bei einem Transformator mit geringer Streuung (= harte Kopplung) wird sich ein großer Kurzschlußstrom einstellen. Bei einem Transformator mit hoher Streuung (= weiche Kopplung) wird der Spannungsabfall über dem sekundärseitig kurzgeschlossenen Transformator größer. Dadurch verringert sich dann der Kurzschlußstrom entsprechend. Dieses Verhalten ist bei Transformatoren bekannt und soll deshalb nicht weiter diskutiert werden. Des weiteren wird ein höherer Strom $i_{3k}(t)$ auch einen höheren Spannungsabfall längs des Tiefsee-Zuleitungskabels 203 und am auf der Bohrinsel befindlichen Transformator 202 hervorrufen, so daß sich das gesamte System selbst stabilisieren kann. Dies gilt bei entsprechender Auslegung auch dann, wenn 3 der 4 Ausgänge kurzgeschlossen sind. Allerdings wird die Spannung des verbleibenden Ausganges dann näherungsweise der Spannung $u_3(t)$ entsprechen (abzüglich der Spannungsabfälle durch die kurzgeschlossenen Ausgänge). Analoge Betrachtungsweisen kann man durchführen, wenn z.B. einzelne Ausgänge nicht belastet werden. Auch hier ist dann mit Schwankungen der sekundärseitigen Ausgänge zu rechnen. Die nachgeschalteten Netzteile müssen also einen weiten Eingangsspannungsbereich aufweisen (etwa 1:4), damit alle Schwankungen durch die Last ausgeglichen werden können.

Ein Nachteil der in Fig. 2 gezeigten und durch Abwandlung der bekannten Schaltung gemäß Fig. 1 entstandenen Schaltung besteht darin, daß auf Grund der unterschiedlichen zu erwartenden Belastungszustände im Prinzip jeder Transformator 204 für die volle Eingangsspannung ausgelegt werden muß. Sonst muß mit einer Sättigung des Kernmaterials mindestens eines Transformators gerechnet werden. Dies sollte im Hinblick auf eine vermeidbare weitere Erwärmung und einen hohen sich einstellenden Magnetisierungsstrom grundsätzlich vermieden werden, denn es würde zum Ausfall des Gesamtsystems bei Kurzschluß eines Transformator-Ausganges führen. Zudem fließt ein Kurzschlußstrom durch alle primärseitigen Wicklungen der Transformatoren 204, so daß zur Reduzierung der Verlustleistung ein großer Kupferquerschnitt verwendet werden muß. Sowohl die Auslegung des Kernmaterials für die volle Eingangsspannung als auch die Auslegung der primärseitigen Wicklungen für einen sich einstellenden Kurzschlußstrom würden zu einem großen Volumen des Druckbehälters führen. Der mit einer Schaltung nach Fig. 2 erreichbare Verzicht auf einen aktiven (und wohl auch kleinvolumigen) Kurzschlußstrombegrenzer führt demzufolge zu einer großvolumigen passiven Anordnung. Ein wesentlicher Vorteil kann also durch ein passives System gemäß Fig. 2 nicht unbedingt erreicht werden.

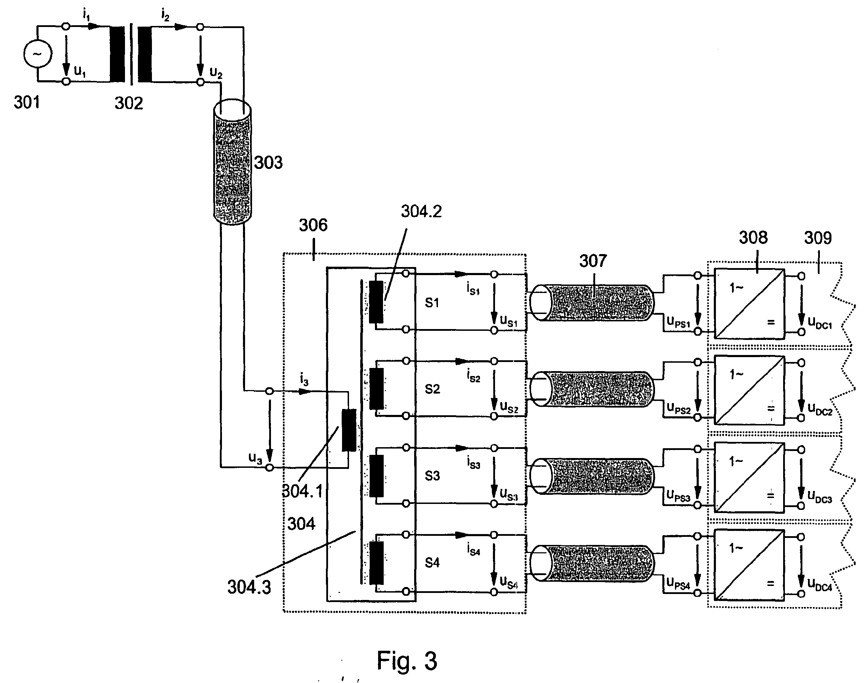

Fig. 3 zeigt eine erfindungsgemäße Schaltungsanordnung, mit der die Nachteile der Anordnung nach Fig. 2 vermieden werden. Dabei wird anstelle von z.B. vier Einzeltransformatoren 204 ein einziger Verteiltransformator 304 angeordnet, der eine Primärwicklung 304.1 und mehrere, im Beispiel vier Sekundärwicklungen 304.2 aufweist, also je anzuschließender Verbindungsleitung 307 eine Sekundärwicklung 304.2. Die übrigen dargestellten Komponenten entsprechen wiederum denjenigen der Fig. 2.

Damit der angestrebte Effekt, nämlich inhärente Kurzschlußfestigkeit erreicht wird, muß bei einer Anzahl n Ausgänge S1 bis Sn die Ausführung der Wicklungen so gestaltet sein; daß jeweils-auf einem Schenkel des Kerns 304: 3 ein Wicklungspaket angeordnet ist, das ein n-tel der Windungen der Primärwicklung 304.1 und vollständig eine der Sekundärwicklungen 304.2 enthält.

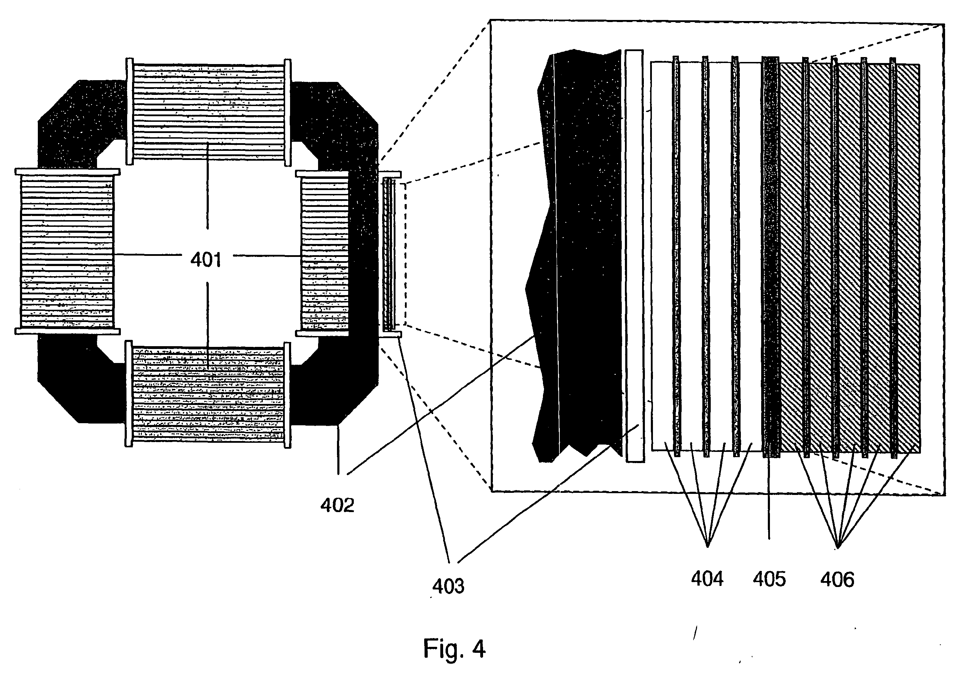

Fig. 4 zeigt beispielhaft eine geeignete Wicklungsausführung für den Fall n=4.

Fig. 4 zeigt einen UU-förmigen Kern 402 eines Verteiltransformators, dessen vier Kernschenkel jeweils ein Wicklungspaket 401 tragen. Jedes Wicklungspaket 401 weist einen Spulenkörper 403 auf, auf dem ein Primärwicklungs-Viertel 404 aufgebracht ist. Darüber befindet sich eine Isolation 405 mit der eine gewünschte Kopplung zwischen dem Primärwicklungsanteil 404 und einer darüber aufgebrachten Sekundärwicklung 406 (entspricht 304.2 der Fig. 3) einstellbar ist.

Bei einem Kurzschluß eines der Ausgänge S1 bis S4 (Fig. 3) verhält sich jeder durch Kern 402 und Wicklung 401 gebildete Teiltransformator im Prinzip wie ein einzelner Transformator 204 nach Figur 2. Die primärseitige Spannung des kurzgeschlossenen Transformators verringert sich, die anderen Teilspannungen erhöhen sich entsprechend. Da alle Teilwicklungen auf einem Kern angeordnet worden sind, muß das Kernmaterial nur einmal genau für die maximal zu erwartende Primärspannung ausgelegt werden. Der Kurzschlußstrom kann, durch die Kopplung der einzelnen Teiltransformatoren eingestellt werden. Einen kurzschlußstrombegrenzenden Einfluß üben auch das Tiefsee-Zuleitungskabel 303 und der Transformator 302 auf der Bohrinsel aus, der zur weiteren Strombegrenzung auch mit einer in Reihe zur Sekundärwicklung des Transformators 302 angeordneten Drosselspule ausgeführt werden kann.

Durch das so gebildete lineare System wird - analog wie im Falle der Anordnung nach Figur 2 - die Ausgangsspannung der einzeln Ausgänge von der Belastung der anderen Ausgänge abhängen. Es muß daher im Beispiel von einem Eingangsspannungsbereich von 1:4 für die nachgeschalteten Netzteile 308 ausgegangen werden. Bei den hier betrachteten höheren Ausgangsleistungen kommen für die Stabilisierung der Ausgangsspannung Schaltnetzteile in Frage, mit denen die variable Eingangsspannung $u_{PS}$ verlustarm (und je nach Anforderung auch potentialfrei) zu einer stabilisierten Ausgangsgleichspannung $u_{DC}$ umgeformt werden kann.

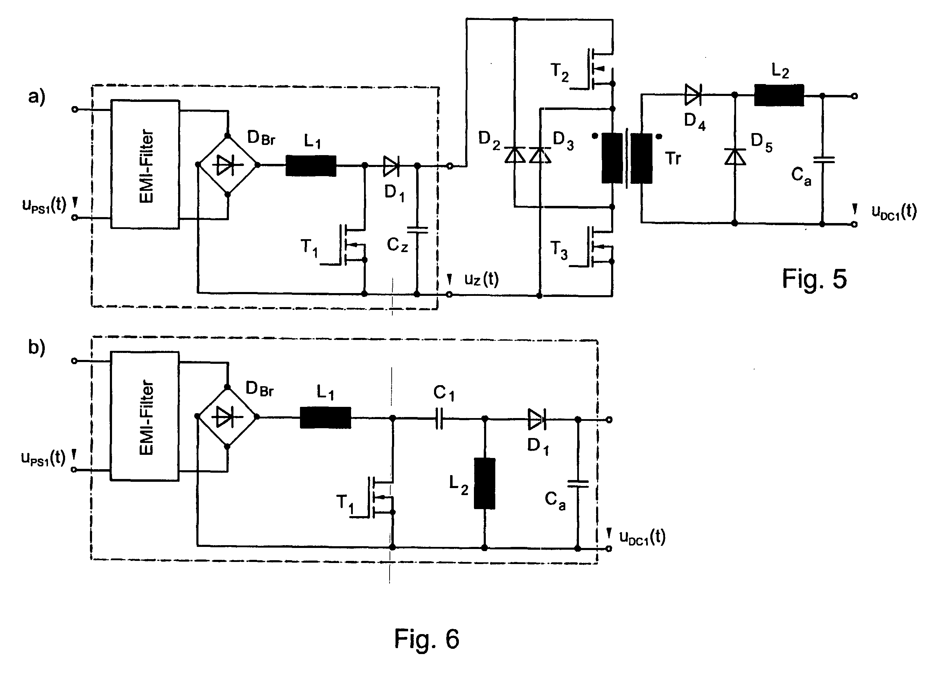

Geeignete Schaltungstopologien zur Realisierung der Schaltnetzteile 308 (Fig. 3) sind in den Figuren 5 und 6 dargestellt.

Fig. 5 zeigt ein zweistufiges Netzteil, wobei die erste Stufe (Boost-Konverter) selbst bei variabler Eingangswechselspannung noch eine stabilisierte Zwischenkreisspannung, die höher ist als der höchste zu erwartende Spitzenwert der Eingangswechselspannung, bei gleichzeitig sinusförmiger Stromaufnahme erzeugt. Die zweite Stufe stellt die Potentialtrennung sicher und garantiert ein wählbares Niveau der Ausgangsspannung. Eine detaillierte Beschreibung der dargestellten und dem Fachmann geläufigen Schaltungsstufen erübrigt sich.

Fig. 6 zeigt ein einstufiges Konzept zur Realisierung des Netzteils 308 mit einer Buck-Boost Funktion. Bei dieser Topologie (SEPIC-Konverter) kann die Ausgangsspannung einen Wert annehmen, der kleiner ist als der höchste zu erwartende Spitzenwert der Eingangswechseispannung (Buck-Funktion). Gleichzeitig kann eine sinusförmige Stromaufnahme gewährleistet werden.

Die in Fig. 4 dargestellte und hier beschriebene Lösung stellt somit eine kostengünstige Realisierung dar, mit der die eingangs gestellten Forderungen erfüllt werden.

Stromverteilungssysteme gemäß der Fig. 1 werden üblicherweise zusätzlich für eine hochfrequente Power Line Kommunikation genutzt. Wenn im Kurzschlußfall Leitungen abgeschaltet werden, ist die Kommunikation unterbrochen. Bei der erfindungsgemäßen Anordnung erfolgt dagegen im Fehlerfall keine Abschaltung, so daß vorteilhaft weiterhin eine Kommunikation zwischen dem jeweiligen Elektronikmodul 309 und der Bohrinsel möglich ist.

Vorteilhaft ist weiterhin, daß der in den Figuren 3 und 4 dargestellte Verteiltransformator 304 so ausgeführt werden kann, daß ein druckfestes Gehäuse entbehrlich ist, wodurch eine weitere Kostenreduzierung erreichbar ist.

## Patentansprüche

1. Stromverteilungssystem, insbesondere zur Anwendung im Bereich der Tiefsee-Ölförderung, wobei ein Verteiltransformator (304) eingesetzt ist, der einen Kern (304.3), eine Primärwicklung (304.1) und mehrere Sekundärwicklungen (304.2) aufweist, **dadurch gekennzeichnet, daß**

   a) elektrische Energie aus einer Spannungsquelle (301) über ein Zuleitungskabel (303) der Primärwicklung (304.1) zugeführt ist,
   b) mehrere elektronische Baugruppen (309) jeweils über ein Verbindungskabel (307) mit jeweils einer der Sekundärwicklungen (304.2) verbunden sind,
   c) auf dem Kern (304.3) des Verteiltransformators (304) eine der Anzahl n der Sekundärwicklungen (304.2) entsprechende Anzahl n von Wicklungspaketen (401) angeordnet ist, wobei jedes Wicklungspaket (401) einen n-ten Teil der Primärwicklung (304.1) und eine der Sekundärwicklungen (304.2) enthält, und die n Teile der Primärwicklung (304.1) elektrisch in Reihe geschaltet sind.

2. Stromverteilungssystem nach Anspruch 1, **dadurch gekennzeichnet, daß** die Spannungsquelle (301) unter Zwischenschaltung eines Transformators (302) mit dem Zuleitungskabel (303) verbunden ist.

3. Stromverteilungssystem nach einem der vorstehenden Ansprüche, **dadurch gekennzeichnet, daß** die Kabel (303, 307) Tiefsee-Kabel sind.

4. Stromverteilungssystem nach einem der vorstehenden Ansprüche, **dadurch gekennzeichnet, daß** die elektronischen Baugruppen (309) jeweils unter Zwischenschaltung eines Netzteils (308) mit dem jeweiligen Verbindungskabel (307) verbunden sind, wobei die Netzteile (308) dafür eingerichtet sind, bei einer sich im Verhältnis 1:n ändernden Eingangswechselspannung eine stabilisierte Ausgangsgleichspannung zu liefern.

5. Stromverteilungssystem nach einem der vorstehenden Ansprüche, **dadurch gekennzeichnet, daß** die Anzahl n = 4 ist, und ein UU-förmiger Kern (304.3, 402) verwendet ist, dessen vier Kernschenkel jeweils ein Wicklungspaket (401) tragen.

**Claims**

1. Power distribution system, in particular for use in the field of deep-sea oil production, use being made of a distribution transformer (304) having a core (304.3), a primary winding (304.1) and a plurality of secondary windings (304.2), **characterised in that**

   a) electrical power is supplied from a voltage source (301) via a feed cable (303) of the primary winding (304.1),
   b) a plurality of electronic modules (309) are respectively connected to one of the secondary windings (304.2), in each case via a connecting cable (307),
   c) there is arranged on the core (304.3) of the distribution transformer (304) a number n of winding packs (401) corresponding to the number n of secondary windings (304.2), each winding pack (401) containing an $n^{th}$ part of the primary winding (304.1) and one of the secondary windings (304.2), and the n parts of the primary winding (304.1) being electrically connected in series.

2. Power distribution system according to claim 1, **characterised in that** the voltage source (301) is connected to the supply cable (303), a transformer (302) being interposed.

3. Power distribution system according to either of the preceding claims, **characterised in that** the cables (303, 307) are deep-sea cables.

4. Power distribution system according to any one of the preceding claims, **characterised in that** the electronic modules (309) are connected to the respective connecting cable (307), a power supply unit (308) being interposed in each case, the power supply units (308) being configured to supply a stabilised DC output voltage in the case of an AC input voltage which changes in a ratio of 1:n.

5. Power distribution system according to any one of the preceding claims, **characterised in that** the number n = 4 and use is made of a UU-shaped core (304.3, 402), the four core legs of which carry a respective winding pack (401).

**Revendications**

1. Système de distribution de courant, à utiliser en particulier dans le domaine de la production pétrolière en haute mer, où est utilisé un transformateur répartiteur (304) qui présente un noyau (304.3), un enroulement primaire (304.1) et plusieurs enroulements secondaires (304.2), **caractérisé en ce que**

   a) l'énergie électrique provient d'une source de tension (301) et est transmise à l'enroulement primaire (304.1) par un câble de distribution (303),
   b) plusieurs blocs électroniques (309) sont reliés respectivement par un câble de liaison (307) à l'un des enroulements secondaires (304.2),
   c) sur le noyau (304.3) du transformateur répartiteur (304) est connectée une quantité n de dispositifs d'enroulements (401) correspondant à la quantité n d'enroulements secondaires (304.2), chaque dispositif d'enroulement (401) contenant une $n^{ème}$ partie de l'enroulement primaire (304.1) et un des enroulements secondaires (304.2), les n parties de l'enroulement primaire (304.1) étant branchées électriquement en série.

2. Système de distribution de courant selon la revendication 1, **caractérisé en ce que** la source de tension (301) est connectée au câble de transmission (303) par un transformateur intermédiaire (302).

3. Système de distribution de courant selon l'une des revendications ci-dessus, **caractérisé en ce que** les câbles (303, 307) sont des câbles sous-marins.

4. Système de distribution de courant selon l'une des revendications ci-dessus, **caractérisé en ce que** les blocs électroniques (309) sont respectivement reliés au câble de liaison (307) par un élément intermédiaire du réseau (308), ces éléments de réseau (308) étant agencés de telle sorte à fournir une tension alternative de sortie stabilisée pour une tension alternative d'entrée variant selon un rapport de fluctuation 1 : n.

5. Système de distribution de courant selon l'une des revendications ci-dessus, **caractérisé en ce que** le montant n = 4 et **en ce qu'**est utilisé un noyau en forme de UU (304.3, 402) dont les quatre branches de noyau portent respectivement un dispositif d'enroulement (401).

Fig. 1

Fig. 2

Fig. 3

Fig. 4

a)

$u_{PS1}(t)$

EMI-Filter

$D_{Br}$  $L_1$  $D_1$  $C_z$  $T_1$  $u_z(t)$

$D_2$  $D_3$  $T_2$  $T_3$  $Tr$  $D_4$  $D_5$  $L_2$  $C_a$  $u_{DC1}(t)$

Fig. 5

b)

$u_{PS1}(t)$

EMI-Filter

$D_{Br}$  $L_1$  $C_1$  $D_1$  $T_1$  $L_2$  $C_a$  $u_{DC1}(t)$

Fig. 6

EP 1 252 698 B1